Europäisches Patentamt

European Patent Office

Office européen des brevets

(11) Veröffentlichungsnummer: **0 264 942**
**A2**

## (12) EUROPÄISCHE PATENTANMELDUNG

(21) Anmeldenummer: 87115500.8

(51) Int. Cl.⁴: **E05B 73/00**

(22) Anmeldetag: 22.10.87

(30) Priorität: 24.10.86 DE 8628436 U

(43) Veröffentlichungstag der Anmeldung:
**27.04.88 Patentblatt 88/17**

(84) Benannte Vertragsstaaten:
**BE DE ES FR GB IT NL SE**

(71) Anmelder: **K. Ylvens Mekaniska**
**Box 13**
**S-64400 Torshälla(SE)**

(72) Erfinder: **Ylven, Kenth**
**Brogatan 11**
**S-64400 Torshälla(SE)**

(74) Vertreter: **Popp, Eugen, Dr. et al**
**MEISSNER, BOLTE & PARTNER**
**Widenmayerstrasse 48 Postfach 86 06 24**
**D-8000 München 86(DE)**

(54) Seil, insbesondere Drahtseil, mit öffenbarem Seilauge.

(57) Seil, insbesondere Drahtseil, mit öffenbarem Seilauge (12), wobei die Verbindung zwischen dem Seil (10) und dem freien Ende (14) der Augbucht (16) durch ein Schloß (18) herstellbar ist, und wobei der Schloßkörper (20) vorzugsweise fest, d. h. unverrutschbar, mit dem Seil (10) verbunden ist.

FIG. 1

## Seil, insbesondere Drahtseil, mit öffenbarem Seilauge

Die Neuerung betrifft ein Seil, insbesondere Drahtseil, mit öffenbarem Seilauge.

Derartige Seile sind allgemein bekannt und werden zum zeitweisen Befestigen oder Verbinden von Gegenständen verwendet. Die herkömmlichen Seile dieser Art sind jedoch nicht diebstahlsicher. Das Seilauge läßt sich ohne große Mühen öffnen.

Der vorliegenden Neuerung liegt daher die Aufgabe zugrunde, ein Seil der genannten Art zu schaffen, dessen Seilauge verschließbar und bei Bedarf wieder öffenbar ist, wobei eine Öffnung des Seilauges durch Unberechtigte nur durch Zerstörung des Seilauges bzw. des Seiles möglich sein soll.

Diese Aufgabe wird neuerungsgemäß durch die Merkmale des Anspruches 1 gelöst, wobei die Unteransprüche bevorzugte konstruktive Details dieser Lösung betreffen.

Neuerungsgemäß ist also das Seilauge durch ein Schloß schließbar.

Von besonderer Bedeutung für die Handhabung des neuerungsgemäßen Seils sind die Merkmale der Ansprüche 6 bis 8, die eine Behinderung des Benutzers beim Öffnen oder Sperren des Schlosses mittels eines Schlüssels durch das durch den Schloßkörper hindurchgeführte Seil wirksam ausschliessen. Die entsprechenden Maßnahmen sind denkbar einfach und trotzdem äußerst wirkungsvoll.

Nachstehend wird eine bevorzugte Ausführungsform der Neuerung anhand der beigefügten Zeichnung näher erläutert. Es zeigen:

Fig. 1 ein neuerungsgemäß ausgebildetes Seil mit geschlossenem Seilauge in perspektivischer Ansicht;

Fig 2 die neuerungsgemäß vorgesehene Anordnung zum Verschließen und Öffnen des Seilauges in schematischer Draufsicht, und

Fig. 3 den neuerungsgemäß verwendeten Schloßkörper entsprechend Fig. 2 im Längsschnitt.

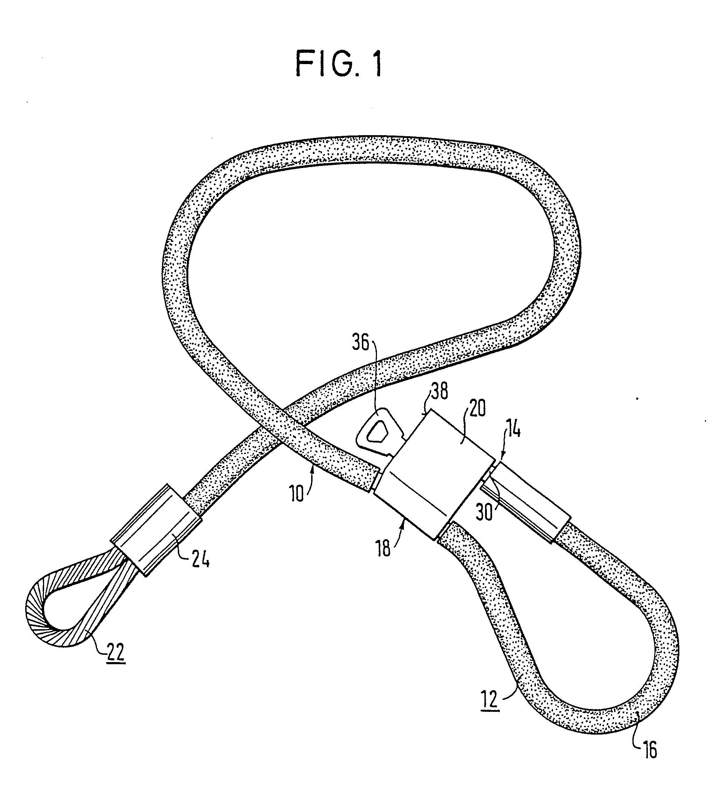

Das in Fig. 1 schematisch dargestellte Seil 10 umfaßt ein öffenbares Seilauge 12, wobei die Verbindung zwischen dem Seil 10 und dem freien Ende 14 der Augbucht 16 durch ein Schloß 18 herstellbar ist. Der Körper 20 des Schlosses 18 ist mit dem Seil 10 verbunden, vorzugsweise starr bzw. unverrutschbar. An dem dem öffenbaren Seilauge 12 gegenüberliegenden Ende weist das Seil 10 ein weiteres Seilauge 22 auf, das in herkömmlicher Weise dauerhaft geschlossen ist, wobei die dauerhafte Verbindung zwischen Seil und Seilende durch eine radial zusammenpreßbare Blei- oder dergleichen -hülse 24 hergestellt ist.

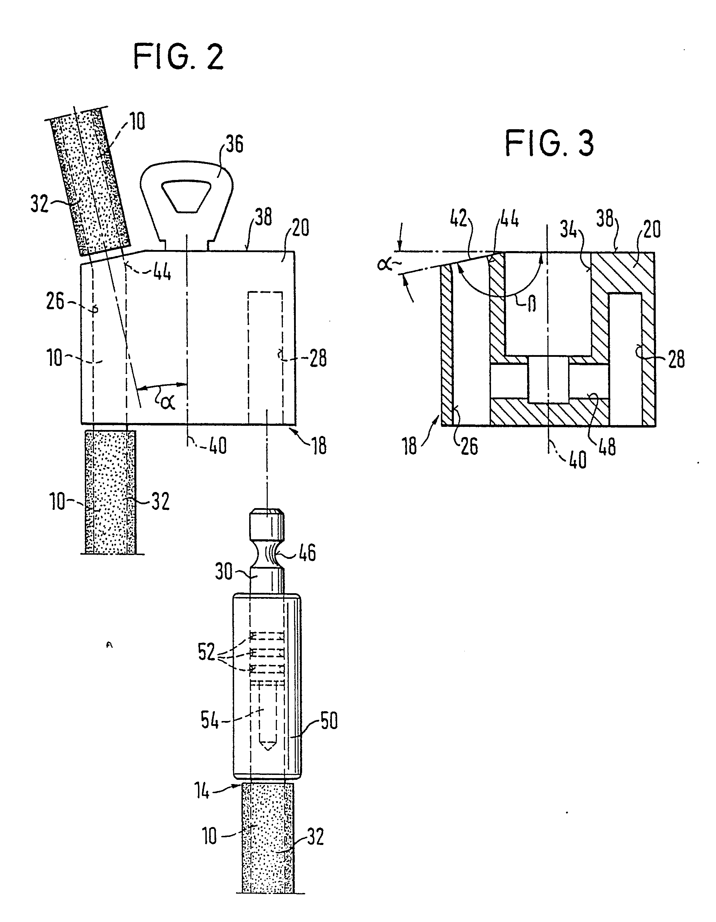

Entsprechend den Figuren 2 und 3 weist der vorzugsweise aus nicht-rostendem Metall hergestellte Schloßkörper 20 einen Durchgang 26 für das Seil 10 sowie eine sich parallel zu diesem Durchgang erstreckende Ausnehmung 28 zur verriegelnden Aufnahme eines am freien Ende 14 der Augbucht 16 angeordneten Schließzapfens 30 auf.

Das Seil 10 ist im Durchgang 26 des Schloßkörpers 20 bei dem dargestellten Ausführungsbeispiel dauerhaft fixiert, und zwar durch eine außerhalb des Schloßkörpers 20 das Seil 10 ummantelnde Schutzhülle 32, die aus biegeelastischem Kunststoff besteht. Der Innendurchmesser des Durchgangs 26 im Schloßkörper 20 ist geringfügig größer als der Außendurchmesser des nackten jedoch kleiner als der Außendurchmesser des ummantelten Seils. Auf diese Weise ist der Schloßkörper 20 am Seil 10 durch die an beiden Seiten bis zum Schloßkörper 20 reichende Schutzhülle 32 unverrutschbar gehalten.

Wie Fig. 3 erkennen läßt, weist der Schloßkörper 20 eine weitere, sich parallel zum Seildurchgang 26 erstreckende Ausnehmung 34 zur Aufnahme eines nicht näher dargestellten Schließzylinders auf, dem ein Schlüssel 36 zugeordnet ist. Die den Schließzylinder aufnehmende Ausnehmung 34 ist an der dem Seilauge 12 abgewandten Seite 38 des Schließkörpers 20 ausgebildet (siehe auch Fig. 1). Dabei die Seite 38 des Schließkörpers 20, an der die Ausnehmung 34 für den Schließzylinder ausgebildet ist, durch eine Ebene definiert, die sich im Bereich der Ausnehmung 34 für den Schließzylinder etwa senkrecht zur Schließzylinderachse 40 bzw. Schlüsselachse und im anschließenden Bereich der dem Seildurchgang 26 zugeordneten Öffnung 42 schräg dazu erstreckt derart, daß das aus dieser Öffnung herausgeführte Seil vom Schließzylinder bzw. Schlüssel 36 sich seitlich wegerstrecken kann (siehe Fig. 1 und 2). Auf diese Weise ist der Schlüssel 36 unbehindert durch das Seil 10 zugänglich.

Grundsätzlich wäre es auch denkbar, bei geradlinigem Durchgang des Seils 10 durch den Schloßkörper 20 den Schließzylinder etwas geneigt zur Mittelachse des Seildurchgangs anzuordnen derart, daß eine Divergenz zwischen Schlüssel 36 und aus dem Schloßkörper 20 herausgeführtes Seil ähnlich derjenigen nach Fig. 2 entsteht.

Um die genannte Divergenz zwischen Schlüssel 36 einerseits und aus dem Schloßkörper 20 herausgeführtem Seil 10 andererseits dauerhaft sicherzustellen, ist das Seil 10 unter einem vorgegebenen Winkel α zur Schließzylinderachse 40 aus dem Schloßkörper 20 herausgeführt derart. daß es sich von der Schließzylinderachse 40 bzw. vom im Schließzylinder eingeführten Schlüssels 36 seitlich wegerstreckt entsprechend der Darstellung in Fig. 1 oder 2. Zu diesem Zweck ist der Seildurchgang 26 im Schloßkörper 20 im in Fig. 2 oberen, der Schlüsselöffnung zugewandten Bereich 44 von der Schließzylinderachse 40 weggebogen bzw. geknickt ausgeführt derart, daß das Seil 10 unter dem Winkel α zur Schließzylinderachse 40 aus dem Schloßkörper 20 herausgeführt ist.

Wie Fig. 3 erkennen läßt, erfolgt die Abschrägung an der dem Seilauge 12 abgewandten Seite 38 des Schloßkörpers 20 unter einem Winkel von $\beta = 180° - \alpha$.

Von besonderer Bedeutung ist noch der Schließzapfen 30, der am freien Ende eine umlaufende bzw. sich über den Umfang erstreckende Nut 46 aufweist, in die ein im Schließkörper 20 verschieblich angeordnetes Rastelement einrastbar ist. Das Rastelement, zum Beispiel Rastkugel oder Rastzapfen, ist in einer in Fig. 3 erkennbaren Querbohrung 48 zwischen der Ausnehmung 34 für den Schließzylinder und der Ausnehmung 28 für den Schließzapfen querverschieblich gelagert. In der Freigabestellung des Schlosses 18 ist das nicht dargestellte Rastelement vorzugsweise entgegen der Wirkung eines elastischen Druckmittels, zum Beispiel einer Schraubendruckfeder, querverschieblich, so daß der Schließzapfen unter seitlichem Wegdrücken des Rastelementes in die Ausnehmung 28 einführbar und auch wieder herausziehbar ist, wobei bei vollständig eingeführtem Schließzapfen 30 das Rastelement in die Nut 46 eingreift.

Durch im Schließzylinder angeordnete und hier nicht näher dargestellte Sperrmittel soll eine Bewegung des Rastelementes in die Freigabestellung verhindert werden können. Der Schlüssel 36 befindet sich dann in der Absperrstellung. In dieser soll der Schlüssel 36 auch aus dem Schloßkörper 20 herausgezogen werden können. In der Freigabestellung für den Schließzapfen 30 soll der Schlüssel 36 dagegen im Schloßkörper 20 gehalten werden.

Der Schließzapfen 30 wird mittels einer Preßhülse 50 aus Blei oder dergleichen fest am Seilende bzw. am freien Ende 14 der Augbucht 16 verankert. Zur festen Verbindung zwischen Preßhülse 50 und Schließzapfen 30 weist dieser an seinem der Nut 46 gegenüberliegenden Ende mindestens eine, hier drei, Umfangsnuten 52 sowie eine an der Oberfläche aufgerauhte Verankerungsspitze 54 auf, welche vom freien Ende des Seils, insbesondere Drahtseils 10, innerhalb der Preßhülse 50 umschlossen ist. Im Bereich der Verankerungsspitze 54 wird somit eine unmittelbare Verbindung zwischen Schließzapfen 30 einerseits und Drahtseil 10 andererseits geschaffen, und zwar durch radiale Pressung der Preßhülse 50.

Die Länge des Seils 10 einschließlich Auge 12 beträgt bei einer bevorzugten Ausführungsform etwa 1 Meter.

Zusammenfassend kann also festgehalten werden, daß von besonderer Bedeutung der schräge Austritt des Seils 10 aus dem Schloßgehäuse 20 an der Schlüsselseite desselben und die besondere Ausbildung des Schließzapfens 30 samt Verankerung desselben am freien Seilende 14 sind.

Sämtliche in den Unterlagen offenbarten Merkmale werden als erfindungswesentlich beansprucht, soweit sie einzeln oder in Kombination gegenüber dem Stand der Technik neu sind.

## Ansprüche

1. Seil, insbesondere Drahtseil, mit öffenbarem Seilauge (12),
dadurch gekennzeichnet, daß
die Verbindung zwischen dem Seil (10) und dem freien Ende (14) der Augbucht (16) durch ein Schloß (18) herstellbar ist, wobei der Schloßkörper (20) vorzugsweise fest, d. h. unverrutschbar, mit dem Seil (10) verbunden ist.

2. Seil nach Anspruch 1, dadurch gekennzeichnet, daß der Schloßkörper (20) einen Durchgang (26) für das Seil (10) sowie eine sich etwa parallel zu diesem Durchgang (20) erstreckende Ausnehmung (28) zur verriegelnden Aufnahme eines am freien Ende (14) der Augbucht (16) angeordneten Schließzapfens (30) aufweist.

3. Seil nach Anspruch 2,
dadurch gekennzeichnet,
daß das Seil (10) im zugeordneten Durchgang (26) des Schloßkörpers (20) fixierbar ist, zum Beispiel mittels einer seitlich eingeführten Klemmschraube oder dergleichen.

4. Seil nach Anspruch 3,
dadurch gekennzeichnet,
daß das Seil (10) mit Ausnahme des Bereichs, der sich im Durchgang (26) des Schloßkörpers (20) befindet, mit einer biegeelastischen Schutzhülle (32), vorzugsweise aus biegeelastischem Kunststoff, ummantelt ist, wobei der Innendurchmesser des Seildurchgangs (26) im Schloßkörper (20) geringfügig größer als der Außendurchmesser des nackten, jedoch kleiner ist als der Außendurchmesser des ummantelten Seils.

5. Seil nach einem oder mehreren der Ansprüche 1 bis 4,
dadurch gekennzeichnet,
daß der Schloßkörper (20) eine weitere, sich etwa parallel zum Seildurchgang (26) erstreckende Ausnehmung (34) zur Aufnahme eines Schließzylinders aufweist, wobei diese Ausnehmung (34) an der dem Seilauge (12) abgewandten Seite (38) des Schließkörpers (20) ausgebildet ist.

6. Seil nach Anspruch 5,
dadurch gekennzeichnet,
daß die Seite (38) des Schließkörpers (20), an der die Ausnehmung (34) für den Schließzylinder ausgebildet ist, durch eine Ebene definiert ist, die sich im Bereich der Ausnehmung (34) für den Schließzylinder etwa senkrecht zur Schließzylinderachse (40) bzw. Schlüsselachse und im anschließenden Bereich der dem Seildurchgang (26) zugeordneten Öffnung (42) schräg dazu erstreckt derart, daß das aus dieser Öffnung (42) herausgeführte Seil (10) vom Schließzylinder bzw. Schlüssel sich seitlich weg erstrecken kann.

7. Seil nach Anspruch 5 oder 6,
dadurch gekennzeichnet,
daß das Seil (10) unter einem Winkel ($\alpha$) zur Schließzylinderachse (40) aus dem Schloßkörper (20) herausgeführt ist derart, daß es sich von der Schließzylinderachse (40) bzw. vom in den Schließzylinder eingeführten Schlüssel (36) seitlich weg erstreckt.

8. Seil nach Anspruch 7,
dadurch gekennzeichnet,
daß der Seildurchgang (26) im Schloßkörper (20) geringfügig gebogen oder geknickt ausgebildet ist derart, daß das Seil (10) unter einem Winkel ($\alpha$) zur Schließzylinderachse (40) aus dem Schloßkörper (20) herausgeführt ist derart, daß es sich von der Schließzylinderachse (40) bzw. vom in den Schließzylinder eingeführten Schlüssel (36) seitlich weg erstreckt.

9. Seil nach einem oder mehreren der Ansprüche 1 bis 8,
dadurch gekennzeichnet,
daß das andere Ende des Seils (10) ein ebenfalls öffenbares Seilauge entsprechend den Ansprüchen 1 bis 8, vorzugsweise jedoch ein dauerhaft geschlossenes Seilauge (22) aufweist.

10. Seil nach einem der Ansprüche 2 bis 9,
dadurch gekennzeichnet,
daß der Schließzapfen (30) am freien Ende eine umlaufende bzw. sich über den Umfang erstreckende Nut (46) aufweist, in die ein im Schloßkörper (20) verschieblich angeordnetes Rastelement einrastbar ist, wobei eine Bewegung des Rastelementes in die Freigabestellung durch im Schließzylinder angeordnete, durch einen Schlüssel (36) betätigbare Sperrmittel verhinderbar ist.

11. Seil, insbesondere nach einem der Ansprüche 1 bis 10,
dadurch gekennzeichnet,
daß der Schließzapfen (30) an seinem Seil-Anschlußende (14) mindestens eine Umfangsnut (52) sowie einen oberflächenrauhen Verankerungsstift (54) aufweist, welcher zum Anschluß an das Seilende von diesem umschlossen ist, wobei die Verbindung zwischen Schließzapfen (30) und Seilende mittels einer das Seilende und den Schließzapfen im Bereich der Umfangsnut (52) sowie des Verankerungsstiftes (54) umgebenden Preßhülse (50) hergestellt ist.

# FIG. 1

# FIG. 2

# FIG. 3